# EUROPEAN PATENT SPECIFICATION

(11) **EP 4 330 297 B1**
(45) Date of publication and mention of the grant of the patent: **30.07.2025**
(21) Application number: 22727000.6
(22) Date of filing: 28.04.2022
(51) Int. Cl.: C08F 4/64, C08F 4/6592, C08F 10/02, C07F 17/00, C08F 4/659, C08F 210/06, C08F 210/16

(54) **METAL COMPLEX CATALYST FOR THE POLYMERIZATION OF OLEFINS**
METALLKOMPLEXKATALYSATOR FÜR DIE POLYMERISIERUNG VON OLEFINEN
COMPLEXE MÉTALLIQUE CATALYSEUR POUR LA POLYMÉRISATION D'OLÉFINES

(30) Priority: 30.04.2021 EP 21171581
(43) Date of publication of application: 06.03.2024
(73) Proprietor: Arlanxeo Netherlands B.V., 6167 RD Geleen (NL)
(72) Inventor: STRUCH, Niklas Christopher, 50859 Köln (DE); QUIROGA-NORAMBUENA, Victor Fidel, 3620 Lanaken (BE); RITTERBEEKS, Nikky, 6162JN Geleen (NL)
(74) Representative: Müller, Lars
(86) International application number: PCT/EP2022/061313
(87) International publication number: WO 2022/229310

(56) References cited:
- KR-A- 20170 073 141

## Description

The present disclosure relates to metal complexes for the polymerization of olefins, a polymerization process to make olefin polymers.

### Background

The polymerization of olefins with metallocene catalysts or post metallocene catalysts is well known. For example, the cyclopentadienyl amido catalysts described in international patent application WO2005090418A1 allow to produce ethylene/alpha-olefin copolymers having high molecular weights. KR 2017 0073141 A discloses catalyst compositions for the polymerization of olefinic monomers.

However, there is a continuous need to further develop new catalysts for the polymerization of olefins and, in particular, for making ethylene copolymers of high molecular weight, preferably of a molecular weight greater than 200 kg/mol.

### Summary

Therefore, in one embodiment there is provided a catalyst composition comprising a metal complex according to the formula (I)

CyLMZₚ (I),

wherein
Cy represents a ligand that is bonded to the metal of the metal complex and the ligand has a cyclopentadienyl unit that is either unsubstituted or substituted with one or more substituent selected
from C1-C20 -linear, branched or cyclic alkyl substituents,
C6 -C12 aryl substituents, and trialkyl silanes, wherein the linear or branched alkyl substituents may be unsubstituted or may be substituted themselves by one or more halogens and wherein the cyclic alkyl substituents and aryl substituents may be unsubstituted or substituted themselves by one or more halogens, one or more C1 to C10 linear or branched alkyls, one or more C1 to C10 linear or branched oxoalkyls, C5 - C10 - cycloalkyls, dialkylamino groups which C1 to C6 alkyls and combinations thereof,
M is the metal of the metal complex and is selected from a group 4 metal,
Z is selected independently from neutral or anionic ligands bonded to the metal M, wherein the neutral ligands are selected from conjugated dienes having from 4 to 40 carbon atoms which, optionally, may be substituted once or more than once with a substituent selected from the group consisting of hydrocarbyl, silyl, halogenated carbyl and combinations thereof, and wherein the anionic ligands are selected from the group consisting of -H, -F, -Cl, -Br, -I, -pseudohalogen, -C₁₋₁₂-alkyl, -O-C₁₋₁₂-alkyl, -C(=O)C₁₋₁₂-alkyl, -acetylacetonate, a biscarboxylate of a C₁₋₁₂ alkyl, -phenyl, -O-phenyl, -Si(C₁₋₁₂-alkyl)₃, -Ge(C₁₋₁₂-alkyl)₃, -N(C₁₋₁₂-alkyl)₂, -P(C₁₋₁₂)-alkyl)₂, -S-C₁₋₁₂-alkyl, all present in anionic form and combinations thereof,
p is 1 or 2, and
L is an amidinate ligand of the formula (II) 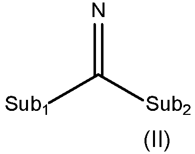
wherein the amidine-containing ligand is covalently bonded to the metal M via the imine nitrogen atom and Sub₁ represent either an aliphatic and cyclic or an aromatic substituent and Sub₁ contains from 6 to 20 carbon atoms and Sub₂ corresponds to the general formula (III)

   - NR₁R₂ (III)
wherein R₁ and R₂ are identical or different and are selected from acyclic, linear or branched, saturated aliphatic hydrocarbon residues having from 4 to 24 carbon atoms and wherein either R₁ and R₂ are both linear or R₁ is linear and R₂ is branched and wherein the hydrocarbon chain of R₁ or R₂ may be interrupted once or more than once by an oxygen atom or a nitrogen atom, or may contain one or more halogen atoms.

In one embodiment R₁ and R₂ are both linear.

In another aspect there is provided a process for preparing a polymer comprising units derived from ethylene wherein the process comprises the steps
(a) providing a monomer composition comprising ethylene;
(b) providing the catalyst composition comprising the metal complex;
(c) contacting at least a fraction of the monomer composition with the catalyst composition to produce a polymer.

In a further aspect there is provided the use of the metal complex as polymerization catalyst for producing a polymer comprising units derived from ethylene.

### Detailed Description

For a complete understanding of the present disclosure and the advantages thereof, reference is made to the following detailed description.

It should be appreciated that the various aspects and embodiments of the detailed description as disclosed herein are illustrative of the specific ways to make and use the disclosure and do not limit the scope of the disclosure when taken into consideration with the claims and the detailed description. It will also be appreciated that features from different aspects and embodiments of the disclosure may be combined with features from different aspects and embodiments of the disclosure.

In the following description the terms "comprising," "including," "having," and their derivatives, are not intended to exclude the presence of any additional component, step or procedure, whether or not the same is specifically disclosed.

In the following description norms may be used. If not indicated otherwise, the norms are used in the version that was in force on March 1, 2020. If no version was in force at that date because, for example, the norm has expired, the version is referred to that was in force at a date that is closest to March 1, 2020.

In the following description the amounts of ingredients of a composition or polymer may be indicated interchangeably by "weight percent", "wt. %" or "% by weight". The terms "weight percent", "wt. %" or "% by weight" are used interchangeably and are based on the total weight of the composition or polymer, respectively, which is 100 % unless indicated otherwise.

The term "phr" means parts per hundred parts of rubber, i.e. the weight percentage based on the total amount of rubber which is set to 100%.

Ranges identified in this disclosure include and disclose all values between the endpoints of the range and include the end points unless stated otherwise.

The term "substituted" is used to describe hydrocarbon-containing organic compounds where at least one hydrogen atom has been replaced by a chemical entity other than hydrogen. That chemical entity is referred to herein interchangeably as "substituent", "residue" or "radical". For example, the term "a methyl group substituted by fluorine" refers to a fluorinated methyl group and includes the groups -CF₃, -CHF₂ and -CH₂F. The term "unsubstituted" is meant to describe a hydrocarbon-containing organic compound of which none of its hydrogen atoms haven been replaced. For example, the term "unsubstituted methyl group" refers to methyl, i.e. -CH₃.

The catalyst compositions according to the present disclosure contain at least one metal complex as described below. The composition may only contain the metal complex according to the present disclosure or the composition may contain one or more additional ingredients.

### Metal complexes

The metal complexes according to the present disclosure correspond to formula (I):

CyLMZₚ (I),

wherein
Cy represents a ligand that is bonded to the metal of the metal complex and the ligand has a cyclopentadienyl unit that is either unsubstituted or substituted with one or more substituent selectedfrom C1-C20 -linear, branched or cyclic alkyl substituents, C6 -C12 aryl substituents, and trialkyl silanes, wherein the linear or branched alkyl substituents may be unsubstituted or may be substituted themselves by one or more halogens and wherein the cyclic alkyl substituents and aryl substituents may be unsubstituted or substituted themselves by one or more halogens, one or more C1 to C10 linear or branched alkyls, one or more C1 to C10 linear or branched oxoalkyls, C5 - C10 - cycloalkyls, dialkylamino groups which C1 to C6 alkyls and combinations thereof,
M is a group 4 metal,
Z is an anionic ligand,
p is 1 or 2, and
L is a ligand of the formula (II) 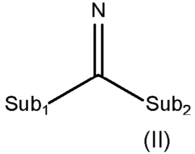
wherein the amidine-containing ligand is covalently bonded to the metal M via the imine nitrogen atom.

Sub₁ is either an aliphatic and cyclic or an aromatic substituent and contains from 6 to 20 carbon atoms.

Preferably Sub₁ represents a substituted or unsubstituted C₆-C₂₀ aryl residue, preferably an unsubstituted phenyl or a substituted phenyl containing one or more substituents selected from halogens, preferably fluorine, and C₁-C₄ alkyls.

In one embodiment Sub₁ is disubstituted, preferably in ortho position.

Specific examples of Sub₁ include but are not limited to 2,6-dimethylphenyl, 2,6-dichlorophenyl or 2,6-difluorophenyl.

Sub₂ corresponds to the general formula (III)

- NR₁R₂ (III)

wherein R₁ and R₂ are identical or different and are selected independently from one another from acyclic, linear or branched, saturated aliphatic hydrocarbons having from 4 to 24 carbon atoms and wherein either R₁ and R₂ are both linear or R₁ is linear and R₂ is branched. In one embodiment R₁ or R₂ is interrupted once or more than once by an oxygen atom or a nitrogen atom, or R₁ or R₂ or both contain one or more halogen atoms.

In one embodiment R₁ is selected from n-pentyl, n-hexyl, n-heptyl, n-octyl, n-nonyl, n-decyl, n-undecyl, n-dodecyl and n-tridecyl.

In one embodiment R₁ and R₂ are both linear.

In another embodiment R₁ and R₂ are identical.

### Ligand Cy

The ligands Cy according to formula ((I) are selected from unsubstituted and substituted cyclopentadienyls. Preferably, the substituents are selected independently of one another from the group consisting of N- or S-heterocyclic substituents, C₁₋₂₀-linear, branched or cyclic alkyl substituents, C₆-C₁₂ aryl substituents, and trialkyl silanes. The linear or branched alkyl substituents may be unsubstituted or may be substituted themselves by one or more halogens. The cyclic alkyl substituents, heterocyclic substituents and aryl substituents may be unsubstituted or substituted themselves by one or more halogens, one or more C₁ to C₁₀ linear or branched alkyls, one or more C₁ to C₁₀ linear or branched oxoalkyls, C₅- C₁₀-cycloalkyls, dialkylamino groups which C₁ to C₆ alkyls and combinations thereof.

Examples of C₁-C₂₀ alkyl substituents include but are not limited to -CH₃, -CH₂CH₃, - CH₂CH₂CH₃, -CH(CH₃)₂, -C₄H₉ (including isomers), -C₆H₁₃ (including isomers), or -C₁₀H₂₁ (including isomers), cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, fluoromethyl, difluromethyl, methoxymethyl, and trifluoromethyl.

Examples of C₆-C₁₂ aryl substituents include but are not limited to phenyl, or biphenyl (including isomers) and phenyls containing one or more alkyl substituent having from 1 to 6 carbon atoms, for example but not limited to methylphenyl, trimethylphenyl, cyclohexylphenyl, napthyl, butylphenyl, or butyldimethylphenyl. Further examples include, N,N-dimethylaminobenzyl, N,N-dimethylaminomethyl, diphenyl-phosphinomethyl.

Examples of cyclic substituted cyclopentadienyls include unsubstituted indenyl, unsubstituted fluorenyl and substituted indenyl and substituted fluorenyls, wherein the substituents are selected from one or more halogens, one or more C₁ to C₁₀ linear or branched alkyls, C₅-C₁₀ cycloalkyls, dialkylamino groups which C₁ to C₆ alkyls and combinations thereof.

Examples of N- or S-heterocyclic substituted cyclopentadienyls include but are not limited to those corresponding to formula (1) and (2) described below.

A heterocyclic cyclopentadienyl according to formula (1): 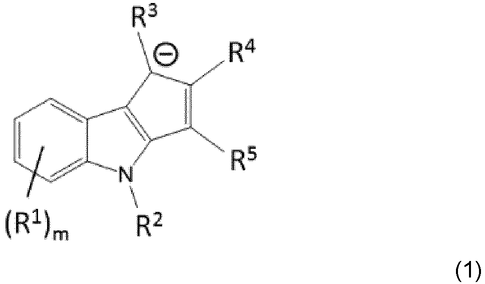 is an indole-fused cyclopentadienyl wherein
R¹ means for each index m individually a C₁-C₄-alkyl that substitutes a hydrogen atom of the benzene ring,
m is a number of 0 to 4, preferably 0 to 2, more preferably 0,
R² means C₁-C₁₀-alkyl, C₅- C₁₀-cycloalkyl, C₆-C₁₀-aryl which is either unsubstituted or substituted with one or more C₁-C₁₀-alkyl groups, one or more C₁-C₄-dialkyl amino groups or a combination thereof,
R³, R⁴ and R⁵ are hydrogen, C₁-C₄-alkyl, or C₆-C₁₀-aryl.

A heterocyclic substituted cyclopentadienyl according to formula (2) 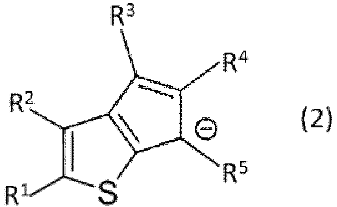 is a thiophene fused cyclopentadienyl wherein
R¹ and R² are selected independently from one another from hydrogen, halogen, C₁-C₁₀ alkyl, C₅- C₁₀ cycloalkyl, and C₆-C₁₀ aryl, or
R¹ and R², together with the 2 double bond carbon atoms of the thiophene ring they are connected to, form an unsubstituted or C₁-C₄ alkyl substituted aliphatic C₅-C₆ cycloalkene ring,
R³, R⁴ and R⁵ are selected independently from each other from hydrogen, C₁-C₄ alkyl, and C₆-C₁₀ aryl.

In one embodiment of the present disclosure Cy is a substituted cyclopentadienyl and contains at least one methyl substituent. In a preferred embodiment of the present disclosure the ligand Cy is selected from cyclopentadienyl, methylcyclopentadienyl, dimethylcyclopentadienyl, trimethylcyclopentadienyl, tetramethylcyclopentadienyl and pentamethylcyclopentadienyl.

### M

The metal M of the metallocene complex of the present disclosure in metal of group 4. For the purpose of this disclosure the term *"metal of group 4"* refers to conventional IUPAC nomenclature. Preferably, the metal M is selected from the group consisting of titanium, zirconium, and hafnium. In a particularly preferred embodiment of the invention, the metal M is titanium. The metal is in an oxidation state such that the overall metal complex is neutral.

### Ligand Z

In one embodiment of the present disclosure the ligand Z is a neutral ligand and is selected from a conjugated diene. Diene ligands may be associated with the metal M in either an s-trans configuration (π-bound) or in an s-cis configuration (either π-bonded or σ-bonded). Preferably, the conjugated diene contains from 4 to 40 carbon atoms and, optionally, may be substituted with once, or more than once, with substituents independently selected from the group consisting of hydrocarbyl, silyl, halogenated carbyl or a combination thereof. Examples of suitable neural ligands include, but are not limited to, butadiene, isoprene, 1,3-pentadiene, 1,4-diphenyl-1,3-butadiene; 2,3-diphenyl-1,3-butadiene; 3-methyl-1,3-pentadiene; 1,4-dibenzyl-1,3-butadiene; 2,4-hexadiene; 2,4,5,7-tetramethyl-3,5-octadiene; 2,2,7,7-tetramethyl-3,5-octadiene; 1,4-ditolyl-1,3-butadiene; 1,4-bis(trimethylsilyl)-1,3-butadiene; 2,3-dimethylbutadiene.

In preferred embodiments of the present disclosure the ligand Z is anionic. Preferably, the ligand Z is selected from the group consisting of -H, -F, -Cl, -Br, -I, -pseudohalogen, -C₁₋₁₂-alkyl, -O-C₁₋₁₂-alkyl, -C(=O)C₁₋₁₂-alkyl, -acetylacetonate, a biscarboxylate of a C₁₋₁₂ alkyl, - phenyl, -O-phenyl, -Si(C₁₋₁₂-alkyl)₃, -Ge(C₁₋₁₂-alkyl)₃, -N(C₁₋₁₂-alkyl)₂, -P(C₁₋₁₂)-alkyl)₂, -S-C₁₋₁₂-alkyl, and combinations thereof; preferably -C₁₋₁₂-alkyl, wherein these ligands are in their anionic form. For the purpose of the specification, pseudohalogens are polyatomic analogues of halogens, whose chemistry resembles that of the true halogens and allows them to substitute for halogens in several classes of chemical compounds. Suitable examples include, but are not limited to, -CN, -OCN, -SCN or -N₃.

Preferably, the anionic ligand Z is selected from the group consisting of the anions of -CH₃, -benzyl, -Si(CH₃)₃, -CH₂-Si(CH₃)₃, -phenyl, -phenyl substituted with 1, 2, 3, 4 or 5 substituents independently of one another selected from the group consisting of -O-C₁₋₁₂-alkyl, -N(C₁₋₁₂-alkyl)₂, -F, and -Si(C₁₋₁₂-alkyl)₃ such as methoxyphenyl, dimethoxyphenyl, N,N-dimethylaminophenyl, bis(N,N-dimethylamino)phenyl, fluorophenyl, difluorophenyl, trifluorophenyl, tetrafluorophenyl, perfluorophenyl, trimethylsilylphenyl, bis(trimethylsilyl)phenyl, tris(trimethylsilyl)phenyl; preferably Z is a methyl anion.

In one embodiment of the present disclosure, index p is 2 such that the compound comprises two ligands Z and preferably both ligands Z are identical and preferably the two ligands Z are each methyl anions.

In one embodiment of the present disclosure the metal complex corresponds to formula (I) and M is titanium.

In one embodiment of the present disclosure the metal complex corresponds to formula (I) and p is 2 and Z is anionic -CH₃.

In one embodiment of the present disclosure the metal complex corresponds to formula (I) and Cy is selected from methyl cyclopentadienyl, dimethylcyclopentadienyl, trimethylcyclpentadienyl, tetramethlycyclopentadienyl and pentamethylcyclopentadienyl.

In one embodiment of the present disclosure the metal complex corresponds to formula (I) and Sub₁ is phenyl and 2,6-difluorophenyl.

### Polymerizations

Ethylene-containing polymers may be produced by using the catalyst composition according to the present disclosure. The metal complex may be used either alone or in combination with other polymerization catalysts or in combination with one or more optional scavengers and activators a combination thereof.

Therefore, in another aspect of the present disclosure there is provided a process for the preparation of a polymer comprising units derived from ethylene comprising
(a) providing a monomer composition containing ethylene;
(b) providing a catalyst composition comprising at least one metal complex according to the present disclosure,
(c) contacting at least a fraction of the monomer composition with at least a fraction of a catalyst composition to polymerize the monomer composition.

The process may further comprise, optionally, providing at least one scavenger and/or, optionally, providing at least one activator. The activator and scavenger may be a component of a catalyst composition comprising the metal complex of the present disclosure or they may be provided separately, for example as separate feed streams.

The monomer composition may be polymerized to produce polymers that have a broad or narrow molecular weight distribution (Mw/Mn). In one embodiment polymers may be produced that have a molecular weight distribution (Mw/Mn) from 1.80 to 30 or from 2 to 10. Polymers may be produced that have a high or low Mooney viscosity. In one embodiment the polymer produced by the process has a Mooney viscosity ML 1+4 at 125°C of at least 40 and up to a Mooney viscosity ML 1 + 8 at 150°C of 100. In one embodiment of the present disclosure the polymer has a Mooney viscosity ML 1 +4 at 125°C of about 40 to about 100. In another embodiment of the present disclosure, the polymer has a Mooney viscosity ML 1 +8 at 150°C of from about 50 to about 100.

Polymers of high or low weight average molecular weight (Mw) may be produced by the process according to the present disclosure. In one embodiment the polymer has an (Mw) greater of at least 200,000 g/mol, for example from about 200,000 g/mol to about 600,000 g/mol.

Polymers with a high or low number average molecular weight (Mn) may be produced. In one embodiment the polymer produced by the process according to the present disclosure has an Mn of from 40,000 g/mol to 250,000 g/mol.

Branched or linear polymers may be produced with the process according to the present disclosure. The branching level of branched polymers may be high, moderate or low. The polymer branching level can be characterized by the parameter Δδ. Δδ, expressed in degrees, is the difference between the phase angle δ at a frequency of 0.1 rad/s and the phase angle δ at a frequency of 100 rad/s, as determined by Dynamic Mechanical Spectroscopy (DMS) at 125°C and 10% strain. This quantity Δδ is a measure for the amount of long chain branched structures present in the polymer and has been introduced in H.C. Booij, Kautschuk + Gummi Kunststoffe, Vol. 44, No. 2, pages 128-130. In one embodiment of the present disclosure polymers with a Δδ of from 2 to 65 may be produced.

The polymers produced by the process according to the present disclosure may be monomodal, or they may be bimodal or multimodal. The polymers may have molecular weight distributions featuring two peaks or one peak and one shoulder in case of bimodal polymers or more than two peaks or two shoulders in case of multimodal polymers in a diagram obtained by gel permeation chromatography (GPC). Reactor blends may be produced also, which means polymers are produced in at least two different reaction vessels and are combined by blending, typically wet blending, i.e. by blending the reaction mixtures. Also block-polymers or grafted polymers may be produced.

### Ethylene-containing polymers:

The polymers that can be produced by using the catalyst composition according to the present disclosure contain units derived from ethylene and the monomer composition to be provided in the process according to the present disclosure contains at least ethylene. Preferably the polymer produced by the process according to the present disclosure is an ethylene-copolymer and more preferably an ethylene/alpha-olefin copolymer.

### Ethylene/alpha-olefin polymers:

In one embodiment of the present disclosure the polymer produced with the catalyst composition according to the present disclosure is an ethylene/alpha-olefin-polymer. The ethylene/alpha-olefin-polymer is a copolymer of ethylene and at least one other alpha-olefin and, optionally, one or more further comonomers. Ethylene/alpha-olefin polymers can be produced that comprise at least 20% by weight (based on the total weight of the polymer) of units derived from ethylene and may contain up to 80 percent by weight (wt. %) of units derived from ethylene. In one embodiment the ethylene-α-olefin-copolymer of the present disclosure comprises from 40 to 70 wt.%, preferably from 44 to 65 wt % of units derived from ethylene. The weight percentages are based on the total weight of the copolymer.

In addition to units derived from ethylene the polymer according to the present disclosure may contain units derived from one or more other alpha-olefins.

### Alpha-olefins:

Alpha-olefins are olefins having a single aliphatic carbon-carbon double bond. The double bond is located at the terminal end (alpha-position) of the olefin. The α-olefins can be aromatic or aliphatic, linear, branched or cyclic. Typically, the alpha-olefins have from 3 to 20 carbon atoms.

Alpha-olefins include those represented by the formula: H₂C=X-CH₃,
where X represents an aliphatic alkylene residue having from 1 to 17 carbon atoms which may be linear or branched. Preferably the branches contain, independently from each other, from 1 to 3 carbon atoms.

In a preferred embodiment alpha-olefins include those represented by the formula: H₂C=CH-(CH₂)ₙ-CH₃ where n = represents 1, 2, 3, 4, 5, 6, 7, 8, 9, 10, 11, 12, 13, 14, 15, 16 and 17.

Preferred examples of alpha-olefins include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-hepta-decene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene.

One or more alpha-olefins may be used in combination. Preferably, the polymer contains at least 5 wt. % or at least 10 wt. % of units derived from one or more alpha-olefin. Polymers may be produced that contain up to 57 wt.%, more preferably up to 55 wt.% of units derived from one or more alpha-olefin (the weight percentages (wt.%) are based on the total weight of the polymer). Preferably, the ethylene- α-olefin-copolymer contains from 17 to 57 wt. % of total units derived from one or more alpha-olefin. Preferably, the polymer contains propylene.

### Non-conjugated dienes:

In addition to ethylene and alpha-olefin the ethylene/alpha-olefin polymers may be produced that additionally contain units derived from one or more non-conjugated diene as comonomer.

Non-conjugated dienes are polyenes comprising at least two carbon-carbon double bonds, the double bonds are non-conjugated and may be present in chains, rings, ring systems or combinations thereof. The carbon-carbon double bonds are separated by at least two carbon atoms. The polyenes may have endocyclic and/or exocyclic double bonds and may have no, the same or different substituents. Preferably, the non-conjugated dienes are aliphatic, more preferably aliphatic and alicyclic. Suitable non-conjugated dienes include, for example, aromatic polyenes, aliphatic polyenes and alicyclic polyenes, preferably polyenes with 6 to 30 carbon atoms (C₆-C₃₀-polyenes, more preferably C₆-C₃₀-dienes). Specific examples of non-conjugated dienes include but are not limited to 1,4-hexadiene, 3-methyl-1,4-hexadiene, 4-methyl-1,4-hexadiene, 5-methyl-1,4-hexadiene, 4-ethyl-1,4-hexadiene, 3,3-dimethyl-1,4-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 1,6-octadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 1,6-octadiene, 6-methyl-1,6-octadiene, 7-methyl-1,6-octadiene, 6-ethyl-1,6-octadiene, 6-propyl-1,6-octadiene, 6-butyl-1,6-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 1,5,9-decatriene, 6-methyl-1,6-undecadiene, 9-methyl-1,8-undecadiene, dicyclopentadiene, and mixtures thereof. Preferred non-conjugated dienes include alicyclic polyenes. Alicyclic dienes have at least one cyclic unit. In a preferred embodiment the non-conjugated dienes are selected from polyenes having at least one endocyclic double bond and optionally at least one exocyclic double bond. Preferred examples include dicyclopentadiene (DCPD), 5-methylene-2-norbornene and 5-ethylidene-2-norbornene (ENB) with ENB being particularly preferred. In one embodiment the copolymer of the present disclosure contains only ENB as non-conjugated diene. The above dienes typically contain one double bond that takes part in the polymerization while the other double bond may not get polymerized and can thus provide a cure side for curing the polymer

Further examples of non-conjugated dienes include non-conjugated dienes include dual polymerizable dienes, i.e. dienes where both of the non-conjugated double bonds may get polymerized. Such dienes can introduce branching sites into the polymer for the production of long chain branches and may contribute to a branched polymer structure. Examples include but are not limited to vinyl substituted aliphatic monocyclic and non-conjugated dienes, vinyl substituted bicyclic and non-conjugated aliphatic dienes. Such dual polymerizable dienes may cause or contribute to the formation of polymer branches. Examples of aliphatic dual polymerizable dienes include 1,4-divinylcyclohexane, 1,3-divinylcyclohexane, 1,3-divinylcyclopentane, 1,5-divinylcyclooctane, 1-allyl-4-vinylcyclohexane, 1,4-diallyl cyclohexane, 1-allyl-5-vinylcyclooctane, 1,5-diallylcyclooctane, 1-allyl-4-isopropenyl-cyclohexane, 1-isopropenyl-4-vinylcyclohexane and 1-isopropenyl-3-vinylcyclopentane, dicyclopentadiene and 1,4-cyclohexadiene. Preferred are non-conjugated vinyl norbornenes and C₈-C₁₂ alpha omega linear dienes (e.g., 1,7-octadiene, 1,8-nonadiene, 1,9-decadiene, 1,10-undecadiene, 1,11-dodecadiene). The dual polymerizable dienes may be further substituted with at least one group comprising a heteroatom of group 13-17 for example O, S, N, P, CI, F, I, Br, or combinations thereof.

Examples of aromatic non-conjugated polyenes include vinylbenzene (including its isomers) and vinyl-isopropenylbenzene (including its isomers).

In a preferred embodiment of the present disclosure the dual polymerizable diene is selected from dicyclopentadiene (DCPD), 5-vinyl-2-norbornene (VNB), 1,7-octadiene and 1,9-decadiene with 5-vinyl-2-norbornene (VNB) being most preferred.

In a typical embodiment of the present disclosure ethylene/alpha-olefin copolymers can be produced that contain at least 3 wt. % and up to and including 15 wt. % of units derived from the one or more non-conjugated diene.

In another embodiment of the present disclosure polymers are produced that contain non-conjugated dienes selected from, 5-ethylidene-2-norbornene (ENB), 5-vinyl-2-norbornene (VNB), 1,7-octadiene, 1,9-decadiene, dicyclopentadiene (DCPD) or a combination thereof. Preferably, the copolymer of the present disclosure contains from 0.05 wt. % to 5 wt. %, more preferably from 0.10 wt. % to 3 wt. % or from 0.15 wt. % to 1.2 wt. % of units derived from VNB (all weight percentages are based on the total weight of ethylene-α-olefin-copolymer). In another embodiment ethylene/α-olefin-copolymer can be produced that contains units derived from 5-ethylidene-2-norbornene and 5-vinyl-2-norbornene, for example the ethylene/alpha-olefin-copolymers produced may contain from 2 to 15 wt. % of units derived from ENB and from 0.05 to 4 wt. % of units derived from VNB.

The ethylene/α-olefin-copolymers can be produced by the process according to the present disclosure that may or may not contain units derived from other comonomers. The sum of units derived from ethylene, alpha-olefin and, optionally, non-conjugated diene may be greater than 90 wt. %, greater than 99 wt.% and including 100 wt.% based on the total weight of the ethylene/alpha-olefin polymer.

### Chain transfer Agents:

The polymerization may include the use of one or more chain transfer agents to control the molecular weight of the polymer. A preferred chain transfer agent includes hydrogen (H₂) and diethyl zinc and combinations thereof.

### Activators:

One or more activators, also referred to herein interchangeably as *cocatalysts",* may be used in the polymerization. The presence of cocatalysts typically increases the rate at which the catalyst polymerizes the olefins. The cocatalyst can also affect the molecular weight, degree of branching, comonomer content, or other properties of the polymer. The cocatalyst is typically introduced into the reactor together with the catalyst, for example as part of a catalyst composition, but may also be introduced separately, for example in a separate feed stream.

Typical cocatalysts include but are not limited to boron containing activators. In a preferred embodiment the activators (b) are selected from boranes (C1) or borates (C2 or C3).

Suitable boron activators (C1) can be represented by the general formula BQ₁Q₂Q₃.

Suitable borate activator according to (C2) can be represented by the general formula G(BQ₁Q₂Q₃Q₄).

Suitable borate activators according to (C3) can be represented by the general formula (J-H)(BQ₁Q₂Q₃Q₄),

In the activator according to (C1) B is boron and Q₁ to Q₃ are substituted or unsubstituted aryl groups, preferably phenyl groups. Suitable substituents include but are not limited to halogens, preferably fluoride, and C₁ to C₄₀ hydrocarbyls, preferably C₁ to C₂₀ alkyls or aromatics. Specific examples of activators according to (C1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, phenyl-bis(pentafluoro-phenyl)borane and the like.

In the activator according to (C2) G is an inorganic or organic cation, B is boron and Q₁ to Q₃ are the same as in (C1) and Q₄ is also a substituted or unsubstituted aryl group, preferably a substituted or unsubstituted phenyl. Substituents include but are not limited to halogens, preferably fluoride, and C₁ to C₄₀ hydrocarbyls, preferably C₁ to C₂₀ alkyls or aromatics. Specific examples for the borate group (BQ₁Q₂Q₃Q₄) include but are not limited to tetrakis(pentafluorophenyl)borate, tetrakis(2,3,5,6-tetrafluorophenyl)borate, tetrakis(2,3,4,5-tetrafluorophenyl)borate, tetrakis(3,4,5-trifluorophenyl)borate, teterakis(2,3,4-trifluorophenyl)borate, phenyltris(pentafluoro-phenyl) borate, tetrakis(3,5-bistrifluoromethylphenyl)borate and the like. Specific examples of G include a ferrocenium cation, an alkyl-substituted ferrocenium cation, silver cation and the like. Specific examples of an organic cation G include a triphenylmethyl cation and the like. G is preferably a carbenium cation, and particularly preferably a triphenylmethyl cation.

In the activator according to (C3) J represents a neutral Lewis base, (J-H) represents a Bronsted acid, B is a boron and both Q₁ to Q₄ and the borate group (BQ₁Q₂Q₃Q₄) are the same as in (C2). Specific examples of the Bronsted acid (J-H) include a trialkyl-substituted ammonium, N,N-dialkylanilinium, dialkylammonium, triaryl phosphonium and the like. Specific examples of activators according to (C3) include but are not limited to triethylammoniumtetrakis(pentafluoro-phenyl)-borate, tripropylammoniumtetrakis(pentafluorophenyl)borate, tri(n-butyl)ammonium-tetrakis(pentafluorophenyl)borate, tri(n-butyl)ammoniumtetrakis(3,5-bistrifluoromethylphenyl)borate, N,N-dimethyl-aniliniumtetrakis(pentafluoro-phenyl)borate, N,N-diethylaniliniumtetrakis(penta-fluorophenyl)borate, N,N-2,4,6-pentamethylanilinium-tetrakis(pentafluorophenyl)borate, N,N-dimethylanilinium-tetrakis(3,5-bistrifluoromethylphenyl)borate, diisopropyl-ammoniumtetrakis(penta-fluorophenyl)borate, dicyclohexyl-ammoniumtetrakis-(pentafluorophenyl)borate, triphenylphosphoniumtetrakis(pentafluorophenyl)borate, tri(methylphenyl)phosphoniumtetrakis(pentafluorophenyl)borate, tri(dimethylphenyl)-phosphonium-tetrakis(pentafluorophenyl)borate and the like.

Other cocatalysts include but are not limited to aluminium alkyls such as trialkyl aluminium, trimethyl aluminium, triethyl aluminium, tri-isobutyl aluminium, or tri-n-octylaluminium. Other examples include but are not limited to alkyl aluminium halides, such as diethyl aluminium chloride, dimethyl aluminium chloride, and ethyl aluminium sesquichloride. Further examples include alumoxanes, including methyl alumoxane (MAO), tetraisobutyl alumoxane (TIBAO) or hexaisobutyl alumoxane (HIBAO).

### Scavengers:

Impurities can harm catalysts by reducing their activity. Compounds that react with such impurities and turn them into harmless compounds for catalyst activity are referred to as scavengers by one skilled in the art of polymerization. Scavengers may be used in the process according to the present disclosure. Examples of scavengers include but are not limited to alkyl aluminum compounds, such as trimethyl aluminum, triethyl aluminum, tri-isobutyl aluminum, and trioctyl aluminum. In some cases the scavenger may also act as a cocatalyst. In this case the scavenger is generally applied in excess of what is needed to fully activate the catalyst.

In an embodiments of the process according to the invention, the molar ratio of activator provided in step (c) of the process to the metallocene compound according to the invention as defined above is from 10: 1 to 1: 1., preferably from 2:1, preferably 1:2.

The scavenger, preferably an aluminum-containing scavenger, can be used in combination with a sterically hindered hydrocarbon or a sterically hindered heterohydrocarbon, preferably a sterically hindered phenol or amine. Specific examples of sterically hindered hydrocarbons and heterohydrocarbons include but are not limited to tert-butanol, *iso*propanol, triphenylcarbinol, 2,6-di-tert-butylphenol, 4-methyl-2,6-di-tert-butylphenol, 4-ethyl-2,6-di-tert-butylphenol, 2,6-di-*tert*-butylanilin, 4-methyl-2,6-di-*tert*-butylanilin, 4-ethyl-2,6-di-*tert*-butylanilin, diisopropylamine, di-tert-butylamine, diphenylamine and the like. A preferred sterically hindered compound is 4-methyl-2,6-tertbutyl phenol.

In the process of producing polymers according to the present disclosure the monomer composition is contacted with the catalyst composition according to the present disclosure. Contacting may take place in the gas phase. It may also take place in the presence of one or more solvents, for example in solution or in a slurry. The polymerization may be carried out in solution or slurry under pressure and at temperatures that no gas phase is formed. Preferred solvents include one or more hydrocarbon solvent. Suitable solvents include C₅₋₁₂ hydrocarbons such as pentane, hexane, heptane, octane, cyclohexane, methylcyclohexane, pentamethyl heptane, hydrogenated naphtha, isomers and mixtures thereof.

The process can be carried at reaction temperatures and pressures as known in the art for the polymerization of such polymers. The polymerization may be carried out as solution polymerization or as slurry polymerization or as polymerization in the gas phase. Preferably, the polymerization is carried out as solution polymerization. Typical reaction temperatures include from 20°C to 150°C or from 60°C to 140°C. In one embodiment of the present disclosure the metallocene compounds are used in a polymerization, preferably solution polymerization at reaction temperatures as high as 130°C and, for example, at suitable pressures to keep the monomers in liquid or dissolved phase.

The catalyst composition may be used alone or in combination with one or more other catalysts other than the metal complexes according to the present disclosure, for example metallocene catalysts, preferably bis-indenyl catalysts.

The polymerization to produce polymers may be carried out in a single reactor or in multiple reactors. The catalyst composition may be added in a first reactor and in another reactor and the catalyst composition may be the same or a different one in the first and the second reactor. The polymerization may be carried out in multiple reactors connected in series or in parallel. In a polymerization in parallel the resulting polymer mixtures can be combined to provide a so-called reactor blend, i.e. a wet blend of two or more polymer compositions.

### Other aspects of the disclosure

Another aspect of the invention relates to a use of a metal complex according to the present disclosure as polymerization catalyst for polymerizing a monomer composition as defined above.

Another aspect of the present disclosure provides a supported catalyst, which comprises the metal complex or the catalyst composition according to the present disclosure, on a supporting material. The supported catalyst may optionally further contain a scavenger or an activator or a combination of scavenger and activator. The supporting material may be a solid material with a high surface area, to which at least one of the metal complexes of the present disclosure is affixed. Typically, the activity of heterogeneous catalysts occurs at the surface atoms. Consequently, great effort is made to maximize the surface area of a catalyst. One suitable method for increasing surface area involves distributing the catalyst over the supporting material. The supporting material may be inert or participate in the catalytic reactions. Preferably, the supporting material is selected from the group consisting of silica, magnesium halogenides, such as MgF₂, MgCl₂, MgBr₂, MgI₂, zeolites, alumina, polystyrene, polypropylene, polyethylene, polyamides, polyesters and combinations thereof.

### Examples

The following examples further illustrate the present disclosure without any intention to limit the disclosure to these examples.

### Methods

### Test methods

### Comonomer composition

Fourier transformation infrared spectroscopy (FT-IR) can be used to determine the composition of the copolymers according to ASTM D3900 (revision date 2017) for the C2/C3 ratio and D6047 (revision date 2017) for the diene content on pressed polymer films.

### Phase angle measurements

The polymer branching can be determined by phase angle measurements on a Montech MDR 3000 moving die rheometer with parameter Δδ. Δδ (expressed in degrees) is the difference between the phase angle δ measured at a frequency of 0.1 rad/s and the phase angle δ measured at a frequency of 100 rad/s determined by Dynamic Mechanical Analysis (DMA) at 125 °C. Δδ is a measure for the presence of long chain branches in the polymer structure. The lower the value of Δδ the more long-chain branches are present in the polymer and has been introduced by H.C. Booij, in Kautschuk + Gummi Kunststoffe, Vol. 44, No. 2, pages 128-130 1991.

### Size exclusion chromatography with differential viscometry (SEC-DV)

The molecular weight distribution (MWD), weight average molecular weight (Mw), numberaverage molecular weight (Mn), the polydispersity (Mw/Mn) and the intrinsic viscosity can be determined by gel permeation size exclusion chromatography (GPC/SEC). A Polymer Char GPC from Polymer Characterization S.A, Valencia, Spain can be used. The Size Exclusion Chromatograph can be equipped with an online viscometer (Polymer CharV-400 viscometer), an online infrared detector (IR5 MCT) and with 3 AGILENT PL OLEXIS columns (7.5 x 300 mm) and a Polymer Char autosampler. Universal calibration of the system can be performed with polyethylene (PE) standards.

The polymer samples can be weighed (in the concentration range of 0.3-1.3 mg/ml) into the vials of the PolymerChar autosampler. In the autosampler the vials are filled automatically with solvent (1,2,4-tri-chlorobenzene) stabilized with 1 g/l di-tertbutylparacresol (DBPC). The samples are kept in the high temperature oven (160°C) for 4 hrs. After this dissolution time, the samples are automatically filtered by an in-line filter before being injected onto the columns. The chromatograph system is operated at 160°C. The flow rate of the 1,2,4-trichlorobenzene eluant is 1.0 mL/min. The chromatograph contains a built-in on-line infrared detector (IR5 MCT) for concentration and a built-in PolymerChar on-line viscometer.

### General operation procedures:

All experiments for preparing the metal complexes were carried out using standard Schlenk line or dry-box techniques under an atmosphere of argon or nitrogen. Solvents were degassed by sparging with nitrogen and dried by passing through a column of the appropriate drying agent. Deuterated solvents were dried over CaH₂, distilled under reduced pressure and stored under nitrogen in PTFE valve ampoules. NMR samples were prepared under nitrogen in 5 mm WILMAD 507-PP tubes fitted with J. YOUNG PTFE valves. ¹H, ¹⁹F and ¹³C-{¹H} spectra were recorded at ambient temperature and referenced internally to residual protic-solvent (¹H) or solvent (¹³C) resonances and are reported relative to tetramethylsilane (d = 0 ppm). Chemical shifts are quoted in δ (ppm) and coupling constants in Hz. NMR spectra were measured on an Avance 400 spectrometer from BRUKER.

### General procedures for making metal complexes:

The metal complexes were prepared by reacting the ligands in a protonolysis reaction with the same molar amount of Cp*TiMe₃ at room temperature. The reaction time below two hours. In a typical experiment 5.7 mg of Cp*TiMe₃ (0.025 mmol) were dissolved in 5 ml toluene. The ligand (0.025 mmol) was also dissolved in 5 ml toluene. Both solutions were combined to produce the metal complexes. The resulting solution was diluted with toluene to 25 ml before it was used in the polymerization experiments. The metal complexes were prepared in situ and were used immediately.

Cp*TiMe₃ was prepared by dissolving Cp*TiCl₃ in hexanes and adding a methyllithium solution in diethyl ether. The mixture was stirred for four hours and the solvent was evaporated. The solid was dissolved again, filtered and the solvent was evaporated. The product was dissolved in pentane and stored into a freezer at -80°C. After three days large crystals were formed. The mixture was filtered to obtain the pure material (73%) in high purity (95% by ¹H-NMR).

The ligands were prepared by reacting the respective amines (HN-R₁R₂) with benzonitrile. The reactions were carried out under nitrogen atmosphere with the use of standard Schlenck techniques. The solvents and reagents were dried before use. In a typical reaction 9.58 mmol of benzonitrile in 15 mL of toluene were stirred overnight over calcium hydride to remove moisture after which the calcium hydride was filtered off. A solution of the amine (9.88 mmol) in 10 ml of toluene was prepared separately and a 3 M solution of methyl magnesium chloride in tetrahydrofurane (3.36 ml, 9.78 mmol) was added to it dropwise and under stirring. The resulting mixture was stirred for 1.5 hours at 50°C. The suspension was cooled to room temperature after which the benzonitrile solution was added. The reaction mixture was stirred for 18 hours at 70°C. The reaction mixture was cooled to room temperature and water was added (15 ml) and the reaction was stirred for another hour at room temperature. The organic phase was separated and washed with water (2 x 15mL). The aqueous phase was extracted with diethyl ether (3 x 15 mL). The combined organic phases were dried over magnesium sulphate. The magnesium sulphate was filtered off and the solvent was evaporated. The ligand was an oil and was purified by column chromatography (silica gel with a solution of hexanes and ethylacetate (1 : 1 v/v) and 1% triethyl amine).

Ligands where Sub1 was 2,6-difluorophenyl were prepared in the same way except that 2,6-difluorobenzonitrile was used instead of benzonitrile.

Various metal complexes of the general structure ((CH₃)₅Cp-Ti-(CH₃)₂)(NC(Sub₁)(Sub₂)) below where Cp represents cyclopentadienyl were prepared with different ligands L, i.e. with different residues Sub₁ and Sub₂ respectively as shown in the general formula below and in table 1 below.

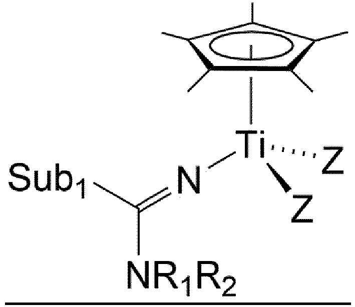

**Table 1**

| Example / (Metal complex) | Sub₁ | Sub₂ (-NR₁R₂) |
|---|---|---|
| Comparative Example 1 (compound CA297) | 2,6-difluorophenyl | N,N-di-(2-ethylhexyl)amino |
| | | R₁ = R₂ = -CHCH₂(C₂H₅)(CH₂)₃CH₃ |
| Comparative Example 2 (compound CA296) | phenyl | N,N-di-(2-ethylhexyl)amino |
| | | R₁ = R₂ = -CHCH₂(C₂H₅)(CH₂)₃CH₃ |
| Comparative Example 3 (compound CA288) | 2,6-difluorophenyl | N,N-di-(2-methylpropyl)amino |
| | | R₁ = R₂ = -CH₂CH(CH₃)₂ |
| Comparative Example 4 (compound CA291) | phenyl | N,N-di-(2-methylpropyl) amino |
| | | R₁ = R₂ = -CH₂CH(CH₃)₂ |
| Example 1 (compound CA287) | 2,6-difluorophenyl | N,N-di-(n-octyl)amino |
| | | R₁ = R₂ = -CH₂(CH₂)₆CH₃ |
| Example 2 (compound CA289) | phenyl | N,N-di-(n-octyl)amino |
| | | R₁ = R₂ = -CH₂(CH₂)₆CH₃ |
| Example 3 (compound CA298) | 2,6-difluorophenyl | N-(n-octyl)-N-(1,3-dimethylbutyl)amino |
| | | R₁ = -CH₂(CH₂)₆CH₃); |
| | | R₂ = -CH(CH₃)CH₂CH(CH₃)CH₃ |
| Example 4 (compound CA300) | phenyl | N-(n-octyl)-N-(1,3-dimethylbutyl)amino |
| | | R₁ = -CH₂(CH₂)₆CH₃); |
| | | R₂ = -CH(CH₃)CH₂CH(CH₃)CH₃ |
| Example 5 (compound CA293) | 2,6-difluorophenyl | N-n-butyl-N--1,3-dimethylbutyl)amino |
| | | R₁ = -CH₂(CH₂)₂CH₃ |
| | | R₂ = -CH(CH₃)CH₂CH(CH₃)CH₃ |
| Example 6 (compound CA292) | phenyl | N-n-butyl-N-1,3-dimethylbutyl)amino |
| | | R₁ = -CH₂(CH₂)₂CH₃ |
| | | R₂ = -CH(CH₃)CH₂CH(CH₃)CH₃ |

### General procedure for polymerizations

The polymerizations were carried with the catalysts from table 1. The monomers where polymerized in a batch reactor with a volume of 1L using a pressure of 7 bars of ethylene (C2) and propylene (C3) at 90°C and polymerizing for 10 minutes in pentamethylheptane (PMH). The catalysts from table 1 were used in an amount of 0.07 µmol unless stated otherwise. The ratio of ethylene/propylene was 400/200 nL/hr. The polymerizations were done in the presence of 84.1 mmol ENB, 84.1 mmol VNB, 0.14 µmol tritylium tetrakis(perfluorophenyl)borate, 450 µmol ztiisobutylaluminium and 900 µmol 4-methyl-2,6-di-tert-butylphenol. Hydrogen was used as chain transfer agent with 0.35 nL/hr. The polymerization results are shown in table 2.

**Table 2**

| Example (catalyst) | Activity [*] | C2 [%] | C3 [%] | ENB [%] | VNB [%] | Mw [kg/mol] | Mn [kg/mol] | Mw/Mn |
|---|---|---|---|---|---|---|---|---|
| Comparative Example 7 (compound 297) | 1167 | 44.7 | 53.4 | 1.15 | 0.73 | 486 | 223 | 2.2 |
| Comparative Example 8 (compound 296) | 673 | 47.2 | 50.7 | 1.20 | 0.86 | 570 | 260 | 2.2 |
| Comparative Example 9 (compound 288) | 1456 | 44.5 | 53.7 | 1.07 | 0.77 | 487 | 219 | 2.2 |
| Comparative Example 10 (compound 291) | 1334 | 48.5 | 49.2 | 1.07 | 0.76 | 576 | 267 | 2.1 |
| Example 7 (compound 287) | 1046 | 45.2 | 52.7 | 1.28 | 0.89 | 535 | 237 | 2.3 |
| Example 8 (compound 289) | 982 | 51.2 | 46.4 | 1.38 | 1.06 | 652 | 297 | 2.2 |
| Example 9 (compound 298)** | 159 | 45.3 | 53.4 | 1.02 | 0.61 | 566 | 277 | 2.0 |
| Example 10 (compound 300)** | 1065 | 47.3 | 51.2 | 0.76 | 0.70 | 645 | 303 | 2.1 |
| Example 11 (compound 293)** | 2029 | 46.3 | 51.9 | 1.09 | 0.65 | 572 | 275 | 2.1 |
| Example 12 (compound 292)** | 1817 | 48.6 | 49.6 | 1.07 | 0.76 | 576 | 267 | 2.2 |

| | | | | | | | | |
|---|---|---|---|---|---|---|---|---|
| *[Kg/mol h bar]; ** catalyst amount was 0.04µmol due to strong catalyst activity | | | | | | | | |

The results in table 2 show that catalysts according to the invention with at least one linear residue R₁ gave polymers with higher molecular weight compared to catalysts where both R₁ and R₂ were branched. This behaviour was observed for substituted and non-substituted residues Sub1. It should be noted that the results of experiments 9 to 12 were obtained already with almost half of the concentration of catalyst.

## Claims

1. A catalyst composition for the polymerization of olefinic monomers comprising a metal complex corresponding to the general formula (I)
CyLMZₚ (I),
wherein
Cy represents a ligand that is bonded to the metal of the metal complex and the ligand has a cyclopentadienyl unit that is either unsubstituted or substituted with one or more substituent selected from C₁₋₂₀-linear, branched or cyclic alkyl substituents, C₆-C₁₂ aryl substituents, and trialkyl silanes, wherein the linear or branched alkyl substituents may be unsubstituted or may be substituted themselves by one or more halogens and wherein the cyclic alkyl substituents and aryl substituents may be unsubstituted or substituted themselves by one or more halogens, one or more C₁ to C₁₀ linear or branched alkyls, one or more C₁ to C₁₀ linear or branched oxoalkyls, C₅- C₁₀-cycloalkyls, dialkylamino groups which C₁ to C₆ alkyls and combinations thereof, ,
M is the metal of the metal complex and is selected from a group 4 metal,
Z is selected independently from neutral or anionic ligands bonded to the metal M, wherein the neutral ligands are selected from conjugated dienes having from 4 to 40 carbon atoms which, optionally, may be substituted once or more than once with a substituent selected from the group consisting of hydrocarbyl, silyl, halogenated carbyl and combinations thereof, and wherein the anionic ligands are selected from the group consisting of -H, -F, -Cl, -Br, -I, -pseudohalogen, -C₁₋₁₂-alkyl, -O-C₁₋₁₂-alkyl, -C(=O)C₁₋₁₂-alkyl, -acetylacetonate, a biscarboxylate of a C₁₋₁₂ alkyl, -phenyl, -O-phenyl, -Si(C₁₋₁₂-alkyl)₃, -Ge(C₁₋₁₂-alkyl)₃, -N(C₁₋₁₂-alkyl)₂, -P(C₁₋₁₂)-alkyl)₂, -S-C₁₋₁₂-alkyl, all present in their anionic forms, and combinations thereof,
p is 1 or 2, and
L is an amidinate ligand of the formula (II) 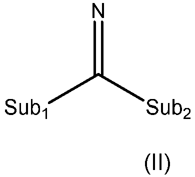
wherein the amidine-containing ligand is covalently bonded to the metal M via the imine nitrogen atom and Sub₁ represent either an aliphatic and cyclic or an aromatic substituent and Sub₁ contains from 6 to 20 carbon atoms and Sub₂ corresponds to the general formula (III)
- NR₁R₂ (III)
wherein R₁ and R₂ are identical or different and are selected from acyclic, linear or branched, saturated aliphatic hydrocarbon residues having from 4 to 24 carbon atoms and wherein either R₁ and R₂ are both linear or R₁ is linear and R₂ is branched and wherein the hydrocarbon chain of R₁ or R₂ may be interrupted once or more than once by an oxygen atom or a nitrogen atom, or may contain one or more halogen atoms.

2. The composition according to claim 1 wherein Sub₂ corresponds to the general formula (III)
- NR₁R₂ (III)
wherein R₁ is selected from n-pentyl, n-hexyl, n-heptyl, n-octyl, n-nonyl, n-decyl, n-undecyl, n-dodecyl and n-tridecyl.

3. The composition according to either claim 1 or claim 2 wherein wherein Sub₂ corresponds to the general formula (III)
- NR₁R₂ (III)
wherein R₁ and R₂ are both linear.

4. The composition according to any one of the preceding claims wherein Sub₁ represents a C₆-C₁₀ aryl residue that is unsubstituted or that is substituted and contains one or more substituents selected from halogens, C₁-C₄ alkyls and a combination thereof.

5. The composition according to any one of the preceding claims wherein Sub₁ is a selected from phenyl and ortho-para-disubstituted phenyl with substituents selected from fluorine, C₁-C₄ alkyls and a combination thereof.

6. The composition according to any one of the preceding claims wherein M is titanium.

7. The composition according to any one of the preceding claims wherein p is 2 and each Z represents methyl in anionic form.

8. The composition according to any one of the preceding claims wherein Cy represents a cyclopentadienyl that is substituted by one or more substituents independently selected from the group consisting of N- or S-heterocyclic substituents, C₁₋₂₀-linear, branched or cyclic alkyl substituents, C₆-C₁₂ aryl substituents, and silanes, wherein substituents may be unsubstituted or may be substituted themselves by one or more halogens, one or more C₁ to C₁₀ linear or branched alkyls, one or more C₁ to C₁₀ linear or branched oxoalkyls, C₅-C₁₀-cycloalkyls, dialkylamino groups which C₁ to C₆ alkyls and combinations thereof.

9. The composition according to any one of the preceding claims wherein Cy is a substituted cyclopentadienyl selected from the group consisting of
(i) cyclopentandienyls that contain from 1 to 5 substituents selected from -CH₃, -CH₂CH₃, -CH₂CH₂CH₃, -CH(CH₃)₂, -C₄H₉ (including isomers), -C₆H₁₃ (including isomers), fluoromethyl, difluoromethyl, trifluoromethyl methoxymethyl and combinations thereof;
(ii) cyclic substituted cyclopentadienyls selected from unsubstituted indenyl, unsubstituted fluorenyl, substituted indenyls and substituted fluorenyls, wherein the substituents are selected from one or more halogens, one or more C₁ to C₁₀ linear or branched alkyls, C₅-C₁₀-cycloalkyls, dialkylamino groups which C₁ to C₆ alkyls and combinations thereof;
(iii) N-heterocyclic substituted cyclopentadienyls corresponding to formula (1): 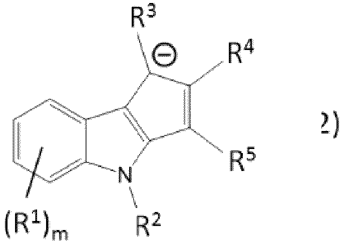 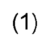 wherein
R¹ represents for each index m individually a C₁-C₄-alkyl that substitutes a hydrogen atom of the benzene ring,
m is a number of 0 to 4, preferably 0 to 2, more preferably 0,
R² represents C₁-C₁₀-alkyl, C₅- C₁₀-cycloalkyl, C₆-C₁₀-aryl which is either unsubstituted or substituted with one or more C₁-C₁₀-alkyl groups, one or more C₁-C₄-dialkyl amino groups or a combination thereof,
R³, R⁴ and R⁵ are hydrogen,C₁-C₄-alkyl, or C₆-C₁₀-aryl;
(iv) S-heterocyclic substituted cyclopentadienyls according to formula (2) 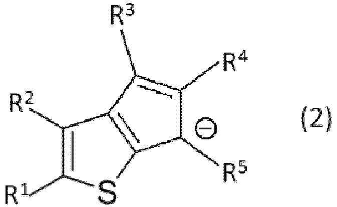 wherein
R¹ and R² are selected independently from one another from hydrogen, halogen, C₁-C₁₀ alkyl, C₅- C₁₀ cycloalkyl, and C₆-C₁₀ aryl, or
R¹ and R², together with the 2 double bond carbon atoms of the thiophene ring they are connected to, form an unsubstituted or C₁-C₄-alkyl substituted aliphatic C₅-C₆-cycloalkene ring,
R³, R⁴ and R⁵ are selected independently from each other from hydrogen, C₁-C₄ alkyl, and C₆-C₁₀-aryl.

10. The composition according to any one of the preceding claims wherein Cy is selected from methylcyclopentadienyl, dimethylcyclopentadienyl, trimethylcyclopentadienyl, tetramethylcyclopentadienyl and pentamethylcyclopentadienyl.

11. A process for preparing a polymer comprising units derived from ethylene wherein the process comprises
(a) providing a monomer composition comprising ethylene;
(b) providing the catalyst composition comprising the metal complex according to any one of claims 1-10;
(c) optionally, providing at least one scavenger;
(d) optionally, providing at least one activator; and
(e) contacting at least a fraction of the monomer composition with the catalyst composition to produce a polymer.

12. The process of claim 11 wherein the polymer is an ethylene/alpha-olefin copolymer and the monomer composition comprises ethylene, propylene and at least one non-conjugated diene having from 6 to 30 carbon atoms, preferably selected from dicyclopentadiene (DCPD), 5-methylene-2-norbornene, 5-ethylidene-2-norbornene (ENB), 5-vinyl-2-norbornene (VNB), 1,7-octadiene, 1,8-nonadiene, 1,9-decadiene and a combination thereof, and preferably has a weight-averaged molecular weight between 200,000 g/mol to 600,000 g/mol.

13. Use of a metal complex as defined in any one of claims 1 to 10 as polymerization catalyst for producing a polymer comprising units derived from ethylene.

## Patentansprüche

1. Katalysatorzusammensetzung für die Polymerisation von olefinischen Monomeren, umfassend einen Metallkomplex der allgemeinen Formel (I)
CyLMZₚ (I),
wobei
Cy für einen Liganden steht, der an das Metall des Metallkomplexes gebunden ist, und der Ligand eine Cyclopentadienyleinheit aufweist, die entweder unsubstituiert oder durch einen oder mehrere Substituenten, die aus linearen, verzweigten oder cyclischen C₁₋₂₀-Alkylsubstituenten, C₆-C₁₂-Arylsubstituenten und Trialkylsilanen ausgewählt sind, substituiert ist, wobei die linearen oder verzweigten Alkylsubstituenten unsubstituiert oder selbst durch ein oder mehrere Halogene substituiert sein können und wobei die cyclischen Alkylsubstituenten und Arylsubstituenten unsubstituiert oder selbst durch ein oder mehrere Halogene, eine oder mehrere lineare oder verzweigte C₁- bis C₁₀-Alkylgruppen, eine oder mehrere lineare oder verzweigte C₁- bis C₁₀-Oxoalkylgruppen, C₅-C₁₀-Cycloalkylgruppen, Dialkylaminogruppen mit C₁- bis C₆-Alkylgruppen und Kombinationen davon substituiert sein können,
M für das das Metall des Metallkomplexes steht und aus einem Metall der Gruppe 4 ausgewählt ist,
Z unabhängig aus neutralen oder anionischen Liganden, die an das Metall M gebunden sind, ausgewählt ist, wobei die neutralen Liganden aus konjugierten Dienen mit 4 bis 40 Kohlenstoffatomen ausgewählt sind, die gegebenenfalls ein- oder mehrfach durch einen Substituenten, der aus der Gruppe bestehend aus Hydrocarbyl, Silyl, halogeniertem Carbyl und Kombinationen davon ausgewählt ist, substituiert sein können, und wobei die anionischen Liganden aus der Gruppe bestehend aus -H, -F, -Cl, -Br, -I, -Pseudohalogen, -C₁₋₁₂-Alkyl, -O-C₁₋₁₂-Alkyl, - C(=O)C₁₋₁₂-Alkyl, -Acetylacetonat, ein Biscarboxylat eines C₁₋₁₂-Alkyls, -Phenyl, - O-Phenyl, -Si(C₁₋₁₂-Alkyl)₃, -Ge(C₁₋₁₂-Alkyl)₃, -N(C₁₋₁₂-Alkyl)₂, -P(C₁₋₁₂)-Alkyl)₂, - S-C₁₋₁₂-Alkyl, die alle in ihren anionischen Formen vorliegen, und Kombinationen davon ausgewählt sind,
p für 1 oder 2 steht und
L für einen Amidinat-Ligand der Formel (II) 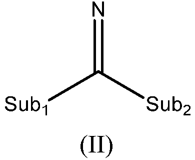
steht, wobei der amidinhaltige Ligand über das Imin-Stickstoffatom kovalent an das Metall M gebunden ist und Sub₁ entweder für einen aliphatischen und cyclischen oder einen aromatischen Substituenten steht und Sub₁ 6 bis 20 Kohlenstoffatome enthält und Sub₂ der allgemeinen Formel (III)
-NR₁R₂ (III)
entspricht, wobei R₁ und R₂ gleich oder verschieden sind und aus acyclischen, linearen oder verzweigten, gesättigten aliphatischen Kohlenwasserstoffresten mit 4 bis 24 Kohlenstoffatomen ausgewählt sind und wobei entweder R₁ und R₂ beide linear sind oder R₁ linear ist und R₂ verzweigt ist und wobei die Kohlenwasserstoffkette von R₁ oder R₂ ein- oder mehrfach durch ein Sauerstoffatom oder ein Stickstoffatom unterbrochen sein kann oder ein oder mehrere Halogenatome enthalten kann.

2. Zusammensetzung nach Anspruch 1, wobei Sub₂ der allgemeinen Formel (III)
-NR₁R₂ (III)
entspricht, wobei R₁ aus n-Pentyl, n-Hexyl, n-Heptyl, n-Octyl, n-Nonyl, n-Decyl, n-Undecyl, n-Dodecyl und n-Tridecyl ausgewählt ist.

3. Zusammensetzung nach Anspruch 1 oder Anspruch 2, wobei Sub₂ der allgemeinen Formel (III)
-NR₁R₂ (III)
entspricht, wobei R₁ und R₂ beide linear sind.

4. Zusammensetzung nach einem der vorhergehenden Ansprüche, wobei Sub₁ für einen C₆-C₁₀-Arylrest steht, der unsubstituiert ist oder der substituiert ist und einen oder mehrere Substituenten enthält, die aus Halogenen, C₁-C₄-Alkylgruppen und einer Kombination davon ausgewählt sind.

5. Zusammensetzung nach einem der vorhergehenden Ansprüche, wobei Sub₁ aus Phenyl und ortho-para-disubstituiertem Phenyl mit Substituenten, die aus Fluor, C₁-C₄-Alkylgruppen und einer Kombination davon ausgewählt sind, ausgewählt ist.

6. Zusammensetzung nach einem der vorhergehenden Ansprüche, wobei M für Titan steht.

7. Zusammensetzung nach einem der vorhergehenden Ansprüche, wobei p für 2 steht und Z jeweils für Methyl in anionischer Form steht.

8. Zusammensetzung nach einem der vorhergehenden Ansprüche, wobei Cy für ein Cyclopentadienyl steht, das durch einen oder mehrere Substituenten, die unabhängig aus der Gruppe bestehend aus N- oder S-heterocyclischen Substituenten, linearen, verzweigten oder cyclischen C₁₋₂₀-Alkylsubstituenten, C₆-C₁₂-Arylsubstituenten und Silanen ausgewählt sind, substituiert ist, wobei Substituenten unsubstituiert oder selbst durch ein oder mehrere Halogene, eine oder mehrere lineare oder verzweigte C₁- bis C₁₀-Alkylgruppen, ein oder mehrere lineare oder verzweigte C₁- bis C₁₀-Oxyalkylgruppen, C₅-C₁₀-Cycloalkylgruppen, Dialkylaminogruppen mit C₁- bis C₆-Alkylgruppen und Kombinationen davon substituiert sein können.

9. Zusammensetzung nach einem der vorhergehenden Ansprüche, wobei Cy für ein substituiertes Cyclopentadienyl steht, das aus der Gruppe ausgewählt ist, die aus Folgendem besteht:
(i) Cyclopentandienylgruppen, die 1 bis 5 Substituenten enthalten, die aus -CH₃, -CH₂CH₃, -CH₂CH₂CH₃, -CH(CH₃)₂, -C₄H₉ (einschließlich Isomeren), -C₆H₁₃ (einschließlich Isomeren), Fluormethyl, Difluormethyl, Trifluormethylmethoxymethyl und Kombinationen davon ausgewählt sind;
(ii) cyclischen substituierten Cyclopentadienylgruppen, die aus unsubstituiertem Indenyl, unsubstituiertem Fluorenyl, substituierten Indenylgruppen und substituierten Fluorenylgruppen ausgewählt sind, wobei die Substituenten aus einem oder mehreren Halogenen, einer oder mehreren linearen oder verzweigten C₁- bis C₁₀-Alkylgruppen, C₅-C₁₀-Cycloalkylgruppen, Dialkylaminogruppen mit C₁- bis C₆-Alkylgruppen und Kombinationen davon ausgewählt sind;
(iii) N-heterocyclischen substituierten Cyclopentadienylgruppen der Formel (1): 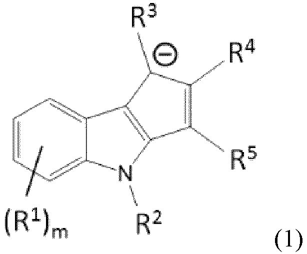 wobei
R¹ für jeden Index m individuell für ein C₁-C₄-Alkyl steht, das ein Wasserstoffatom des Benzolrings ersetzt,
m für eine Zahl von 0 bis 4, vorzugsweise 0 bis 2, besonders bevorzugt 0, steht,
R² für C₁-C₁₀-Alkyl, C₅-C₁₀-Cycloalkyl, C₆-C₁₀-Aryl, das entweder unsubstituiert oder durch eine oder mehrere C₁-C₁₀-Alkylgruppen, eine oder mehrere C₁-C₄-Dialkylaminogruppen oder eine Kombination davon substituiert ist, steht,
R³, R⁴ und R⁵ für Wasserstoff, C₁-C₄-Alkyl oder C₆-C₁₀-Aryl stehen;
(iv) S-heterocyclischen substituierten Cyclopentadienylgruppen gemäß Formel (2) 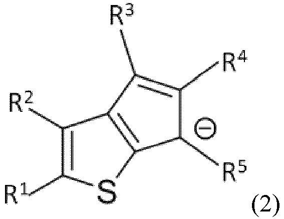 wobei
R¹ und R² unabhängig voneinander aus Wasserstoff, Halogen, C₁-C₁₀-Alkyl, C₅-C₁₀-Cycloalkyl und C₆-C₁₀-Aryl ausgewählt sind oder
R¹ und R² zusammen mit den 2 Doppelbindungskohlenstoffatomen des Thiophenrings, an den sie gebunden sind, einen unsubstituierten oder C₁-C₄-alkylsubstituierten aliphatischen C₅-C₆-Cycloalkenring bilden,
R³, R⁴ und R⁵ unabhängig voneinander aus Wasserstoff, C₁-C₄-Alkyl und C₆-C₁₀-Aryl ausgewählt sind.

10. Zusammensetzung nach einem der vorhergehenden Ansprüche, wobei Cy aus Methylcyclopentadienyl, Dimethylcyclopentadienyl, Trimethylcyclopentadienyl, Tetramethylcyclopentadienyl und Pentamethylcyclopentadienyl ausgewählt ist.

11. Verfahren zur Herstellung eines Polymers, das Einheiten umfasst, die sich von Ethylen ableiten, wobei das Verfahren Folgendes umfasst:
(a) Bereitstellen einer Monomerzusammensetzung, die Ethylen umfasst;
(b) Bereitstellen der Katalysatorzusammensetzung, die den Metallkomplex nach einem der Ansprüche 1-10 umfasst;
(c) gegebenenfalls Bereitstellen mindestens eines Scavengers;
(d) gegebenenfalls Bereitstellen mindestens eines Aktivators; und
(e) Inkontaktbringen mindestens eines Teils der Monomerzusammensetzung mit der Katalysatorzusammensetzung zur Bildung eines Polymers.

12. Verfahren nach Anspruch 11, wobei das Polymer ein Ethylen/alpha-Olefin-Copolymer ist und die Monomerzusammensetzung Ethylen, Propylen und mindestens ein nichtkonjugiertes Dien mit 6 bis 30 Kohlenstoffatomen, das vorzugsweise aus Dicyclopentadien (DCPD), 5-Methylen-2-norbornen, 5-Ethyliden-2-norbornen (ENB), 5-Vinyl-2-norbornen (VNB), 1,7-Octadien, 1,8-Nonadien, 1,9-Decadien und einer Kombination davon ausgewählt ist, umfasst und vorzugsweise ein gewichtsmittleres Molekulargewicht zwischen 200.000 g/mol bis 600.000 g/mol aufweist.

13. Verwendung eines Metallkomplexes gemäß einem der Ansprüche 1 bis 10 als Polymerisationskatalysator zur Herstellung eines Polymers, das Einheiten umfasst, die sich von Ethylen ableiten.

## Revendications

1. Composition de catalyseur pour la polymérisation de monomères oléfiniques comprenant un complexe métallique correspondant à la formule générale (I)
CyLMZₚ (I),
Cy représentant un ligand qui est lié au métal du complexe métallique et le ligand ayant un motif cyclopentadiényle qui est soit non substitué, soit substitué par un ou plusieurs substituants choisis parmi des substituants C₁₋₂₀-alkyle linéaire, ramifié ou cyclique, des substituants C₆-C₁₂ aryle, et des trialkylsilanes, les substituants alkyle linéaires ou ramifiés pouvant être non substitués ou pouvant être substitués eux-mêmes par un ou plusieurs halogènes et les substituants alkyle cycliques et les substituants aryle pouvant être non substitués ou substitués eux-mêmes par un ou plusieurs halogènes, un ou plusieurs C₁ à C₁₀ alkyles linéaires ou ramifiés, un ou plusieurs C₁ à C₁₀ oxalkyles linéaires ou ramifiés, C₅- C₁₀-cycloalkyles, des groupes dialkylamino avec C₁ à C₆ alkyles et des combinaisons de ceux-ci,
M étant le métal du complexe métallique et étant choisi parmi un métal du groupe 4,
Z étant choisi indépendamment parmi des ligands neutres ou anioniques liés au métal M, les ligands neutres étant choisis parmi des diènes conjugués ayant de 4 à 40 atomes de carbone qui, éventuellement, peuvent être substitués une fois ou plus d'une fois par un substituant choisi dans le groupe constitué par hydrocarbyle, silyle, carbyle halogéné et des combinaisons de ceux-ci, et les ligands anioniques étant choisis dans le groupe constitué par -H, -F, -Cl, -Br, - I, -pseudohalogène, -C₁₋₁₂-alkyle, -O-C₁₋₁₂-alkyle, - C(=O) C₁₋₁₂-alkyle, -acétylacétonate, un biscarboxylate d'un C₁₋₁₂ alkyle, -phényle, -O-phényle, -Si(C₁₋₁₂-alkyle)₃, -Ge(C₁₋₁₂-alkyle)₃, -N(C₁₋₁₂-alkyle)₂, -P(C₁₋₁₂) - alkyle)₂, -S-C₁₋₁₂-alkyle, tous présents sous leurs formes anioniques, et des combinaisons de ceux-ci,
P étant 1 ou 2, et
L étant un ligand amidinate de la formule (II) 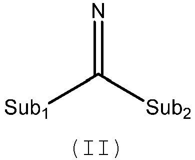
le ligand contenant une amidine étant lié de manière covalente au métal M via l'atome d'azote d'imine et Sub₁ représentant soit un substituant aliphatique et cyclique, soit un substituant aromatique et Sub₁ contenant de 6 à 20 atomes de carbone et Sub₂ correspondant à la formule générale (III)
-NR₁R₂ (III)
R₁ et R₂ étant identiques ou différents et étant choisis parmi des radicaux hydrocarbonés aliphatiques saturés, linéaires ou ramifiés, acycliques ayant de 4 à 24 atomes de carbone et soit R₁ et R₂ étant tous deux linéaires, soit R₁ étant linéaire et R₂ étant ramifié et la chaîne hydrocarbonée de R₁ ou R₂ pouvant être interrompue une fois ou plus d'une fois par un atome d'oxygène ou un atome d'azote, ou pouvant contenir un ou plusieurs atomes d'halogène.

2. Composition selon la revendication 1, Sub₂ correspondant à la formule générale (III)
-NR₁R₂ (III)
R₁ étant choisi parmi n-pentyle, n-hexyle, n-heptyle, n-octyle, n-nonyle, n-décyle, n-undécyle, n-dodécyle et n-tridécyle.

3. Composition selon soit la revendication 1, soit la revendication 2, Sub₂ correspondant à la formule générale (III)
-NR₁R₂ (III)
R₁ et R₂ étant tous deux linéaires.

4. Composition selon l'une quelconque des revendications précédentes, Sub₁ représentant un radical C₆-C₁₀ aryle qui est non substitué ou qui est substitué et contient un ou plusieurs substituants choisis parmi des halogènes, des C₁-C₄ alkyles et une combinaison de ceux-ci.

5. Composition selon l'une quelconque des revendications précédentes, Sub₁ étant l'un choisi parmi phényle et phényle ortho-para-disubstitué comportant des substituants choisis parmi fluor, C₁-C₄ alkyls et une combinaison de ceux-ci.

6. Composition selon l'une quelconque des revendications précédentes, M étant le titane.

7. Composition selon l'une quelconque des revendications précédentes, p étant 2 et chaque Z représentant méthyle sous forme anionique.

8. Composition selon l'une quelconque des revendications précédentes, Cy représentant un cyclopentadiényle qui est substitué par un ou plusieurs substituants indépendamment choisis dans le groupe constitué par des substituants N-hétérocycliques ou S-hétérocycliques, des substituants C₁₋₂₀-alkyle linéaire, ramifié ou cyclique, des substituants C₆-C₁₂ aryle, et des silanes, les substituants pouvant être non substitués ou pouvant être substitués eux-mêmes par un ou plusieurs halogènes, un ou plusieurs C₁ à C₁₀ alkyles linéaires ou ramifiés, un ou plusieurs C₁ à C₁₀ oxalkyles linéaires ou ramifiés, C₅-C₁₀-cycloalkyles, des groupes dialkylamino avec des C₁ à C₆ alkyles et des combinaisons de ceux-ci.

9. Composition selon l'une quelconque des revendications précédentes, Cy étant un cyclopentadiényle substitué choisi dans le groupe constitué par
(i) des cyclopentadiényles qui contiennent de 1 à 5 substituants choisis parmi -CH₃, -CH₂CH₃, -CH₂CH₂CH₃, - CH(CH₃)₂, -C₄H₉ (y compris les isomères), -C₆H₁₃ (y compris les isomères), fluorométhyle, difluorométhyle, trifluorométhyle méthoxyméthyle et des combinaisons de ceux-ci ;
(ii) des cyclopentadiényles substitués cycliques choisis parmi indényle non substitué, fluorényle non substitué, des indényles substitués et des fluorényles substitués, les substituants étant choisis parmi un ou plusieurs halogènes, un ou plusieurs C₁ à C₁₀ alkyles linéaires ou ramifiés, C₅-C₁₀-cycloalkyles, des groupes dialkylamino avec des C₁ à C₆ alkyles et des combinaisons de ceux-ci ;
(iii) des cyclopentadiényles substitués N-hétérocycliques correspondant à la formule (1) : 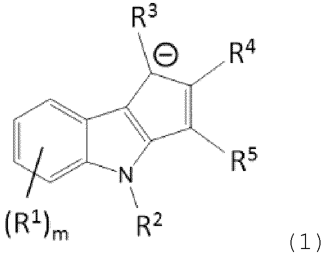
R¹ représentant pour chaque indice m individuellement un C₁-C₄-alkyle qui substitue un atome d'hydrogène du cycle benzénique,
m étant un nombre de 0 à 4, préférablement 0 à 2, plus préférablement 0,
R² représentant C₁-C₁₀-alkyle, C₅- C₁₀-cycloalkyle, C₆-C₁₀-aryle qui est soit non substitué, soit substitué par un ou plusieurs groupes C₁-C₁₀-alkyle, un ou plusieurs groupes C₁-C₄-dialkylamino ou une combinaison de ceux-ci, R³, R⁴ et R⁵ étant hydrogène, C₁-C₄-alkyle, ou C₆-C₁₀-aryle ;
(iv) des cyclopentadiényles substitués S-hétérocycliques selon la formule (2) 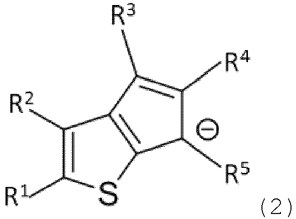
R¹ et R² étant choisis indépendamment l'un de l'autre parmi hydrogène, halogène, C₁-C₁₀ alkyle, C₅- C₁₀ cycloalkyle, et C₆-C₁₀ aryle, ou
R¹ et R², conjointement avec les 2 atomes de carbone de doubles liaisons du cycle thiophène auquel ils sont reliés, formant un cycle C₅-C₆-cycloalcène aliphatique substitué par C₁-C₄-alkyle ou non substitué,
R³, R⁴ et R⁵ étant choisis indépendamment les uns des autres parmi hydrogène , C₁-C₄ alkyle, et C₆-C₁₀-aryle.

10. Composition selon l'une quelconque des revendications précédentes, Cy étant choisi parmi méthylcyclopentadiényle, diméthylcyclopentadiényle, triméthylcyclopentadiényle, tétraméthylcyclopentadiényle et pentaméthylcyclopentadiényle.

11. Procédé de préparation d'un polymère comprenant des motifs issus de l'éthylène, dans lequel le procédé comprend
(a) fourniture d'une composition de monomères comprenant de l'éthylène ;
(b) fourniture de la composition de catalyseur comprenant le complexe métallique selon l'une quelconque des revendications 1 à 10 ;
(c) éventuellement, fourniture d'au moins un agent de piégeage ;
(d) éventuellement, fourniture d'au moins un activateur ; et
(e) mise en contact d'au moins une fraction de la composition de monomères avec la composition de catalyseur pour produire un polymère.

12. Procédé selon la revendication 11, dans lequel le polymère est un copolymère éthylène/alpha-oléfine et la composition de monomères comprend de l'éthylène, du propylène et au moins un diène non conjugué ayant de 6 à 30 atomes de carbone, de préférence choisi parmi dicyclopentadiène (DCPD), 5-méthylène-2-norbornène, 5-éthylidène-2-norbornène (ENB), 5-vinyl-2-norbornène (VNB), 1,7-octadiène, 1,8-nonadiène, 1,9-décadiène et une combinaison de ceux-ci, et de préférence a un poids moléculaire moyen en poids compris entre 200 000 g/mole et 600 000 g/mole.

13. Utilisation d'un complexe métallique tel que défini dans l'une quelconque des revendications 1 à 10 comme catalyseur de polymérisation pour produire un polymère comprenant des motifs issus de l'éthylène.
